# EUROPEAN PATENT APPLICATION

(11) **EP 2 060 661 A1**
(43) Date of publication of application: **20.05.2009**
(21) Application number: 07405328.1
(22) Date of filing: 16.11.2007
(51) Int. Cl.: C25B 15/00, C25B 9/00

(54) **Electrolyser for producing substances**

(71) Applicant: AccaGen SA, 6805 Mezzovico (CH)
(72) Inventor: Dall'Ara, Roberto, 6900 Massagno (CH)
(74) Representative: Fiammenghi-Domenighetti, Delfina

(57) **Abstract**

Electrolysis device 10 for producing substances, comprising a container 1, and a body C composed of a set of electrolytic cells 2, in which the electrolyte has a pressure less than that of an insulating substance present in the space between the body C and the container.

## Description

The present invention relates to the technical field of electrolysis devices.

The present invention relates to an electrolysis device for producing substances as defined by the preamble of Claim 1.

Electrolysis is a process that converts electrical energy to chemical energy. The process is the reverse of that which takes place in a battery. In a battery, a chemical reaction is used to produce electrical energy, while in electrolysis electrical energy is used to create a chemical reaction which would not take place spontaneously.

In most cases, a substance subjected to electrolysis is broken down into its constituent elements.

The application of a continuous electric current causes the electrolysis of all substances which, in solution or melted, are decomposed into ions, namely acids, bases and salts, and the same applies to water, which is decomposed into gaseous oxygen and hydrogen by the electric current.

In the case of electrolysis of water, the electrolytic cell is composed of two electrodes of a metal immersed in an electrolytic solution and connected to a current source. The electric current dissociates the water molecule to form the ions H+ and OH-.

In electrolytic cells, the hydrogen ions acquire electrons at the cathode in a reduction reaction which leads to the formation of gaseous hydrogen:

2H₂O + 2e- → H₂ + 2OH-.

At the anode, the hydroxide ions undergo oxidation and give up electrons:

2H₂O → O₂ + 4H+ + 4e-.

The complete reaction is therefore as follows:

2H₂O → 2H₂ + 02

An electrolyser is an electrochemical system on which electrical work is done by an environment outside the said system, causing a non-spontaneous chemical reduction-oxidation reaction, again divided into two sub-reactions located at the electrode/solution interphases, where the anode is the oxidation site and the cathode is the reduction site.

In the case of water electrolysis, the industrial electrolysers on the market at present essentially use three different methods for producing hydrogen: two use an aqueous solution, for example potassium hydroxide (KOH) or sodium hydroxide (NaOH), used as electrolytes because of their high conductivity, with unipolar or bipolar electrodes.

Unipolar electrolysers have container-like structures and have their electrodes connected in parallel or in series; the cathode is separated from the anode by a membrane which divides the two gases produced, but allows the passage of the ions.

The bipolar structure is more like an assembly of single elements: the electrolytic cells are usually connected in series, and therefore, in the case of water electrolysis, hydrogen is produced at one side of the structure while oxygen is produced at the other; in this case also, the electrodes are separated by a suitable membrane, as also described in DE 4 418 999.

The third type of electrolyser is called a "solid polymer electrolyte" electrolyser. In this unit, the electrolyte consists of a solid ion-conducting membrane, unlike the aqueous solution used in alkaline electrolysers; this membrane allows H+ ions to pass from the anode to the cathode where the gaseous hydrogen is formed.

Electrolysis devices of the alkaline type are characterized by a concentration of electrolytic solution in the range from 20% to 30% of an alkaline substance which can be potash, KOH, or sodium hydroxide, NaOH, while the operating temperatures range from 50°C to 100°C, providing a compromise between high electrolyte conductivity and limited corrosive action. An electrolysis device of this kind consists of a specified number of cells.

As mentioned in the introduction, there are two types of configuration, depending on the electrode used: namely monopolar and bipolar. With monopolar electrodes, the cells can be electrically connected in series or in parallel, while with bipolar electrodes the cells are usually connected in series. The latter type has the feature of being more compact, thus reducing electrical losses in the electrolyte and in the cables. On the other hand, the development of parasitic currents which give rise to corrosion problems makes it necessary to use more complicated methods of construction than with single-pole solutions.

The cathode region is separated from the anode region by a diaphragm which has the property of allowing ions to pass through by diffusion but not allowing the passage of the gaseous substances produced by the electrolysis.

The preceding paragraphs have mentioned a single example of electrolysis, namely the electrolysis of water, but other substances can be produced by electrolysis; another example of a substance which can be made by electrolysis is chlorine, starting with sodium chloride dissolved in water.

The object of the invention is to develop an electrolysis device which is an improvement of the known devices, particularly in respect of the safety of the device in case of a malfunction of elements within it, the energy efficiency of the production of substances, and the possibility of producing hydrogen efficiently at high pressure. In fact, the electrolysis device proposed by the invention prevents losses of electrolyte from the central module to the outside, increases safety in case of incidents, protects the anode and provides electrical insulation from the external environment, and stabilizes the operating pressure inside the device, thus reducing the dynamic mechanical stress on the components, particularly on the internal seals.

These objects are achieved by the structural characteristics defined in Claim 1.

The invention will now be described more fully with reference to the attached drawings which show schematically some preferred embodiments, provided solely by way of example and without restrictive intent, since technical or constructional changes can be made at any time without departure from the scope of the present invention.

In the said drawings,
Figure 1 shows a flow diagram of the electrolyser 10, where the arrows between the various elements indicate the flow of substances in the electrolyser 10.
Figure 2 shows a side view of the electrolysis module.

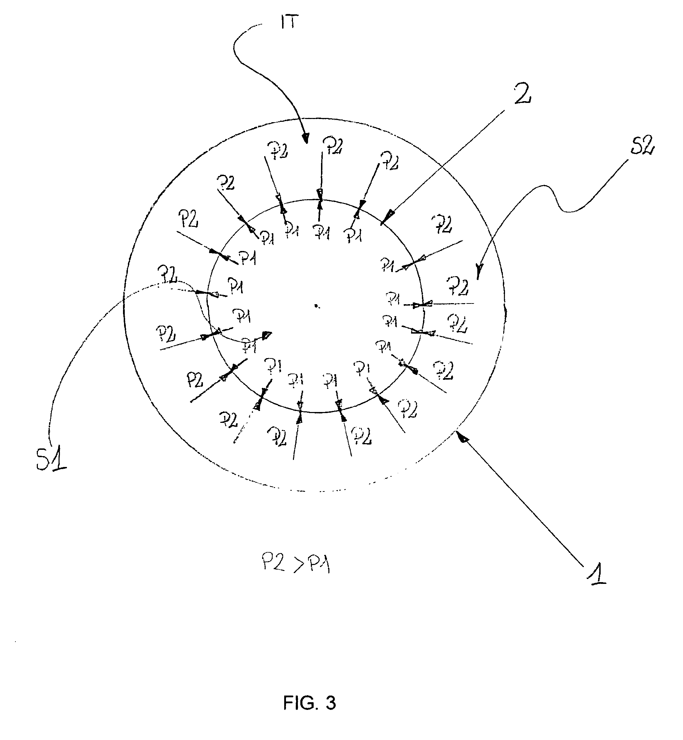

Figure 3 shows a cross-sectional side view of the container 1 with the electrolysis module EM formed by the said cells 2 inside it; Figure 3 also shows the pressure difference P2 > P1 between the two substances S1 and S2, where S1 is present inside the cells 2 and S2 is present in the space IT between the container 1 and the electrolysis module EM.

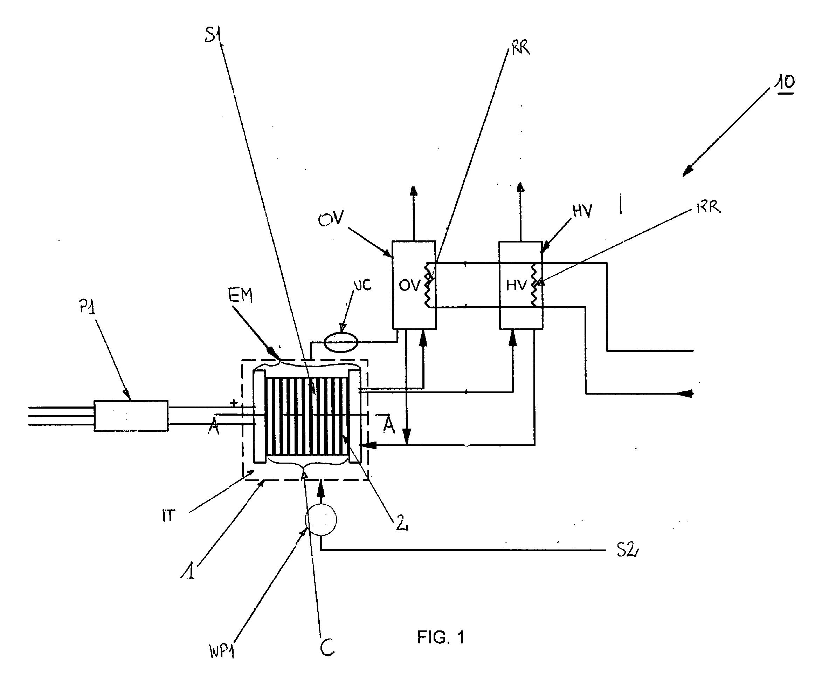

Figure 1 shows the following components of the electrolyser 10: an electric current source P1; a central part or electrolysis module EM formed by an assembly of cells 2 where electrolysis takes place, causing the production of substances such as hydrogen and oxygen from a first substance S1; the said electrolyte, present inside the cell 2; and a container 1 of any shape, for example a substantially cylindrical shape with an axis A-A.

A second substance S2 is located between the cell assembly 2, also called the body C, and the inner surface of the container 1, the said second substance being preferably a liquid electrical insulator.

The electrolyser 10 is provided with a hydraulic pump WP1 for pumping the second substance S2 into the container 1 through a suitable flow channel T1.

The container 1 is connected by means of a further flow channel T2 for the flow of the substance S2 to an overpressure device UC. The said device UC comprises means such as hydraulic valves, which are controlled by a control device so as to create an overpressure of the second substance S2 with respect to the pressure of the substance S1 contained in the cells 2.

The result of the aforementioned structural configuration is a difference in pressure, P1 and P2, between the two aforementioned substances. In conventional installations, the electrolyte in the cell is subjected to continuous pressure variations, causing a dynamic mechanical stress to which the various components of the body C are subjected; this unfavourable effect is overcome by the electrolysis device proposed by the invention, since the pressure acting on the individual cells is equal to the pressure difference which is controlled by the overpressure device UC in such a way that it remains constant in time.

The electrolyser 10 also has substance separators OV and HV, provided with suitable means for separating the electrolysis products from the electrolyte, the said separators OV and HV being provided with devices comprising cooling means RR.

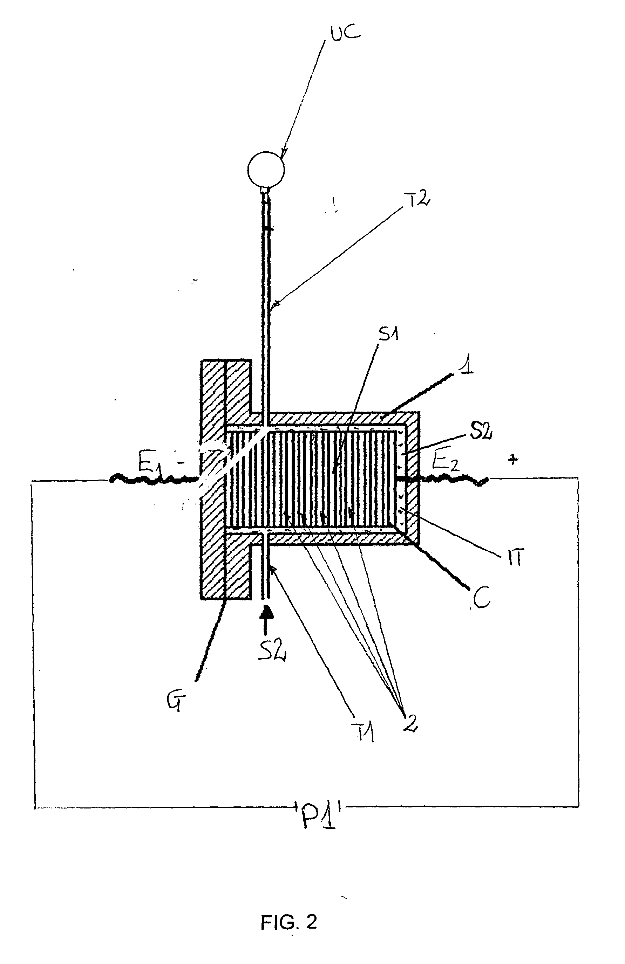

Figure 2 shows a side view of the electrolyser 10 proposed by the invention, with the electrolyser module EM, in which the electrolytic cells 2 forming the said module can be seen. Also visible are the container of the electrolysis module EM and the spacing seals G for providing a seal in the module.

The electrolyser device 10 proposed by the invention comprises a container 1 of any shape, inside which is a body which contains a set of electrolytic cells C, which in this case are provided with electrodes of bipolar or monopolar configuration connected in parallel to each other, and are positioned longitudinally with respect to the axis A-A of the container 1. The body C is connected electrically at its ends to an electrical power source P1, particularly an appropriate transformer rectifier unit which supplies continuous electric current for the electrolysis.

The high mechanical stability of the electrodes, which are covered with a coating of synthetic insulating material for interconnecting the elements to form a set of electrolytic cells C, greatly facilitates assembly, dismantling and maintenance.

The said set of electrolytic cells C, together with the contact electrodes E1 and E2, is called the electrolysis module EM.

The surface of the said body C, positioned longitudinally with respect to the axis A-A of the container 1, consists of electrically insulated synthetic material, particularly reinforced injection-moulded plastics, which is very strong and highly insulating.

The first substance S1 which is located in each cell 2 is an electrolytic solution, formed for example by potash, KOH, or sodium hydroxide, NaOH, mixed with the process substance which, in the case of water electrolysis, is demineralized water.

In the electrolytic cell 2, in the case of water electrolysis, the hydrogen ions acquire electrons at the cathode in a reduction reaction, producing gaseous hydrogen, while in the same cell 2 the hydroxide ions undergo oxidation at the anode and give up electrons, thus forming gaseous oxygen.

Each cell 2 is provided with the said diaphragm DF, consisting of a special porous membrane, particularly one composed of an asbestos-free synthetic material, the said membrane not permitting the passage of the gaseous substances produced at the cathode and at the anode.

Each electrolytic cell 2 is therefore provided with a cathode on one side and an anode on the other side, and uses a first substance S1 and electric current, both supplied from suitable sources, to generate oxygen at the cathode and hydrogen at the anode; the gases produced by the electrolysis are separated by the said diaphragm DF.

The permeability of the diaphragm to the products is of considerable importance, since, in water electrolysis for example, any contact between hydrogen and oxygen would cause explosive processes that would compromise the safety of the whole installation.

When the cells 2 are connected electrically in series, the supply voltage of the electrolyser 10 is equal to that of an individual cell multiplied by the number of cells.

The electrolytic process of molecular decomposition of the process substances of which the substance S 1 partially consists requires constant topping up in order to provide continuity of the process. In the case of water electrolysis, the topping up is carried out by providing a continuous or intermittent supply of demineralized water in proportion to the quantity decomposed by the electrolysis process.

The aforementioned pressure difference, P1 and P2, between the first and the second substance, S1 and S2, prevents the outflow of electrolyte from the body C through the cracks caused by defective or ageing seals. If the seals are ageing or defective, the second substance S2 present in the space IT between the container 1 and the electrolysis module EM is sucked back into the cells 2.

If the second substance S2 is of the same nature as the process substance contained in S1, in the case of water electrolysis, if S2 is demineralized water, the possible reverse suction of S2 into the body C is equivalent to partially or totally topping up the substance decomposed by the electrolytic process.

The pump WP1, together with the overpressure device UC, can be used simultaneously for maintaining the pressure P2 and for topping up the process substance.

If the substance S2 is the process substance contained in S1, the topping up of the process substance through the space IT between the body C and the container 1 causes the desired flushing process in the space IT, thus maintaining the purity of the substance S2 without contamination with electrolyte S1.

This is because the substances S1 and S2 tend to mix with each other under the effect of equalization of concentrations due to osmotic pressure.

The effect of flushing the space IT can be achieved by making the substance S2 flow within IT independently of the function of topping up the process substances.

If the electrically insulating substance S2 is contaminated with the electrically conductive substance S1, parasitic currents may be created between the interiors of the cells 2 and other electrically conducting parts of the installation 10.

In order to keep these parasitic currents below the threshold of damage to the cells 2, the body 1 and the flow channels T1 and T2 are electrically insulated with respect to the electrical potential generated by P1 in the electrolysis module EM.

The electrolyser 10 is provided with an appropriate transformer rectifier unit P1 which supplies electric current for the electrolysis process in the cells 2.

## Claims

1. Electrolysis device (10), comprising a container (1), a body (C) consisting of one or more electrolytic cells (2) containing a first substance (S1), in which the said cells are connected electrically to each other, and in which each electrolytic cell (2) is provided with an anode and a cathode, each cell (2) having a diaphragm (DF) permeable to the said first substance (S1) but impermeable to the gaseous substances produced by the electrolysis, the said body (C) also being positioned in the said container (1), while a second substance (S2) is present in the space (IT) between the body (C) and the container (1),
***characterized in that***
the second substance (S2) interacts with an overpressure device (UC) to which it is connected by means of a flow channel (T2) so as to be at a higher pressure than the pressure of the first substance (S1) contained in the electrolytic cells (2).

2. Electrolysis device (10) according to Claim 1, **characterized in that** the body (C) and the flow channels for the second substance (T1, T2) are electrically insulated, as is the inner surface of the container (1).

3. Electrolysis device (10) according to any one of the preceding claims, in which the second substance (S2) is an electrical insulator.

4. Electrolysis device (10) according to any one of the preceding claims, **characterized in that** the container (1) consists of insulating material.

5. Electrolyser device (10) according to any one of the preceding claims, in which the container (1) is provided with means capable of completely or partially replacing the second substance (S2) present in the container (1).

6. Electrolyser device (10) according to any one of the preceding claims, in which the space (IT) is provided with a sensor for measuring the electrical conductivity of the said second substance (S2).

7. Electrolyser device (10) according to any one of the preceding claims, in which the said body (C) is provided with additional electrical insulation.

8. Electrolyser device (10) according to any one of the preceding claims, in which the electrodes (E1, E2) are electrically insulated from the said second substance (S2) and/or from the said container (1) and from the flow channels (T1, T2).

9. Electrolyser device (10) according to any one of the preceding claims, in which the said second substance (S2) which flows out of the device because of the overpressure (UC) is not returned to containers (OV, HV) but is lost.
